# EUROPEAN PATENT SPECIFICATION

(11) **EP 1 370 080 B1**
(45) Date of publication and mention of the grant of the patent: **18.05.2011**
(21) Application number: 02002063.2
(22) Date of filing: 08.02.2002
(51) Int. Cl.: H04N 5/68

(54) **Apparatus and method for displaying images on a cathode ray tube**
Verfahren und Vorrichtung zur Anzeige von Bildern auf einer Kathodenstrahlröhre
Appareil et méthode pour afficher des images sur un tube à rayons cathodiques

(43) Date of publication of application: 10.12.2003
(73) Proprietor: Vestel Elektronik AS, 450030 Manisa (TR)
(72) Inventor: Durma, Hikmet c/o Vestel Elektronik Sanayi, Organize Sanayi Bolgesi Manisa (TR)
(74) Representative: HOFFMANN EITLE

(56) References cited:
- EP-A- 0 416 289
- DE-A- 3 934 762
- US-A- 3 980 405
- US-A- 4 916 365
- PATENT ABSTRACTS OF JAPAN vol. 1999, no. 04, 30 April 1999 (1999-04-30) & JP 11 008778 A (MITSUBISHI ELECTRIC CORP), 12 January 1999 (1999-01-12)
- PATENT ABSTRACTS OF JAPAN vol. 015, no. 158 (P-1193), 19 April 1991 (1991-04-19) & JP 03 027089 A (ANRITSU CORP), 5 February 1991 (1991-02-05)

## Description

The present invention relates to an apparatus for displaying images on a cathode ray tube. The invention in particular relates to devices where a Cathode Ray Tube (CRT) is used as a screen element.

When the electron beam hits the inner surface of a cathode ray tube, in short CRT, it causes a bright spot visible from the outside, as is widely known. Intensity modulation of this bright spot together with horizontal and vertical sweep, also called scanning, forms a visible image. With repetition of this process, sequences of images with motion perception can be produced on the CRT as is very well known from devices such as TV receivers. However, light intensity caused by scanning electron beams not only depends on the video signal but also varies with the position of the beam on the CRT display. While beam scanning is taking place, brightness intensity on the CRT display in general increases near the centre, and decreases toward the edges. Because of these problems a geometrically correct image produced by proper scanning will not appear uniformly bright across the entire screen of the CRT. Especially with the increasing trend toward flat screen and large sized high beam deflecting CRTs, this problem is becoming even more significant then before. This kind of problem arises due to the imperfections of manufacturing processes, physics and the need to lower the costs of CRTs in consumer electronics equipment. Particularly for the recently developed flat CRT units it is important to improve the brightness uniformity in order to obtain images of perceptually uniform brightness across the entire screen.

Generally, the brightness intensity of the beam decreases with the increasing angle between the main symmetrical axis of the CRT and deflected beam itself. This is one of the fundamental reasons for brightness variation. In addition, the new generation of CRT styles that have flat appearance made the brightness uniformity problem even worse. Some models with flat screens are produced with nearly spherical curved surface in the inside to reduce scan distance related focus and brightness problems. But that curvature difference causes variance in glass thickness. This variance makes the glass at the centre of the CRT thinner than at the edges. When considering that light transmittance of the screen glass is less than 100% to obtain a satisfactory contrast ratio, it is obvious that the phosphor illumination will be absorbed more in the peripheral areas near the edges than in the centre. As a result of this, brightness uniformity gets degraded. The brightness uniformity is defined as the percentage of the lowest brightness density of the CRT to the highest brightness density.

In addition, the difference between the inner surface and the outer surface curvature of the flat CRT also forms a large, screen sized negative optical lens. Usually the centre of this type of CRT screen is near flat. Therefore the illumination generated toward the centre of the CRT is less affected by the refraction effect of this lens. However, at the peripheral areas near the edges, because the curvature radius gets smaller in the inside while the outside remains flat, a higher degree of negative lens is formed. This lens causes diffusing light beams to further separate from each other by refraction, which results in darker appearance near the peripheral screen areas.

Among the other factors that cause a reduced brightness uniformity, are bigger screen sizes and new image aspect ratio 16:9 CRTs. These new CRTs are also presenting poor brightness uniformity performance. Generally, the small screen size CRTs do not necessarily require special measures to be taken by the TV manufacturer to correct this problem because they offer an acceptable level of brightness uniformity. With the bigger deflection angles combined with flat screen styles the brightness uniformity has dropped significantly. This causes visual disturbance by dark areas gradually increasing from the centre to the edges of the picture tube, which is not acceptable.

CRT manufacturers try to reduce these imperfections by adjusting the inner electromagnetic field distribution, mask geometry and phosphor distribution. But brightness uniformity remains a problem in many cases. The 16:9 aspect ratio flat CRTs that are flat both in the inside and outside require more sophisticated beam scanning electronics to maintain focus and brightness uniformity throughout the whole screem.

To overcome brightness uniformity problems of CRTs, it is known to perform gain modulation of the video signal by using video processor chips. Video processor chips such as TDA 4885 together with TDA 4856 perform scan dependent video signal gain modulation to achieve brightness uniformity over the CRT screen. For example, this is the case for CRT based monitors manufactured for computers. There are also more sophisticated methods controlled by a computer system for unifying the brightness on CRTs that are used in professional applications such as photographic printing equipment, as cited in US patent 5.250.878, and medical displays as described. Such advanced methods are very costly for inexpensive mass production CRT based consumer products such as TV receivers. Because of the cost considerations most TV receiver manufacturers do not utilise such solutions. These manufacturers usually maintain an acceptable level of brightness uniformity on their products just by eliminating the unacceptable units during production or improving the brightness distribution by means other than beam intensity modulation techniques. All these solutions are limited to video signal processing techniques that are either too sophisticated to incorporate in consumer electronics or require significant cost increase.

From US 4,916,365 a color CRT displaying correction circuit is known, comprising means for deflecting an electron beam and means for driving the electron beam deflection means to enable a horizontal and vertical sweep of the electron beam across the screen, means for modulating the beam intensity, means for providing a brightness uniformity control signal at a signal level which depends on the horizontal and/or vertical amount of deflection of the electron beam, and means for applying the brightness uniformity control signal to the grid G2 and/or to each of the grids G1 of the cathode ray tube.

From US 3 980 405 a circuit for modulating a DC bias potential at the first grid G1 is known, comprising an oscillator circuit, a transistor coupled to receive a signal from the oscillator circuit, and a bias network to set the operating point of the transistor is known.

Accordingly, it is the object of the present invention to achieve a perceptually uniform brightness in a simple yet efficient manner.

According to the present invention, this object is solved as defined in claim 1. Advantageous embodiments of the present invention are given in the dependent claims.

According to the present invention, brightness uniformity across the screen of a cathode ray tube is achieved by means of applying a brightness uniformity control signal to the second grid G2 and/or to each of the first grids G1 of the cathode ray tube. The brightness uniformity control signal has a signal level which depends on the horizontal and/or vertical amount of deflection of the electron beam. Grid G1 is the grid closest to the cathode, also known as the Wehnheldt cylinder. Grid G2 is sometimes referred to as the intermediate anode. The grid G1 conventionally serves to modulate the beam intensity in accordance with an image to be displayed on the screen of the cathode ray tube, while grid G2 conventionally functions to prevent off axis electrons from entering into subsequent beam focussing and acceleration stages of the cathode ray tube, which are conventionally labelled G3 and G4. G2 thus contributes to focussing the electron beam. Grid G2 can be provided in common for all cathodes present in a colour cathode ray tube. In the alternative, for each of the cathodes present, a separate grid G2 may be provided.

According to the present invention, the means for providing a brightness uniformity control signal comprises a circuit comprising an oscillator circuit coupled to oscillate in synchronism with the horizontal sweep synchronous signal and/or an oscillator circuit coupled to oscillate in synchronism with said vertical sweep, a transistor coupled to receive a signal from said oscillator circuit, a bias network to set an operating point of said transistor in the saturated region, such that said transistor can selectively amplify portions of said signal in time intervals where the electron beam deflection amount is large, and a capacitive element for coupling an output signal provided by said transistor to said second grid G2 and/or said first grid or grids G1.

According to an advantageous embodiment of the present invention, signals provided by the fly back transformer are used for generating the brightness uniformity control signal.

A fly back transformer winding which is provided for generating the filament current for the cathode ray tube, is particularly suitable for providing such horizontal sweep synchronous signal. This signal can advantageously be taken to stimulate a filter circuit, of at least second order, for example a circuit comprising oscillating elements or an oscillator circuit. The signal may then be subjected to a non-linear amplification and/or clipping in order to obtain a signal which can be coupled to the grid G2 and/or to each of the grids G1 of the cathode ray tube. This is an advantageous and simple way to obtain a brightness uniformity control signal having a signal level which is a monotonic function of the horizontal amount of deflection during the active line trace of the electron beam.

Of course, the concept of improving the brightness uniformity according to the principles of the present invention is not limited to the horizontal dimension of the CRT screen, but may equally be applied to the vertical dimension. It is to be noted that the term "horizontal" denotes the larger axis of the screen while the term "vertical" denotes the smaller axis of the screen, the vertical and the horizontal axis being perpendicular to each other. The terms "horizontal" and "vertical" are not meant to be limited to a relation to the direction of gravity or to the orientation of the natural horizon.

According to another embodiment of the present invention, horizontal sweep synchronous signals and/or vertical sweep synchronous signals for generating the brightness uniformity control signal are taken from a preferably digital system timing controller.

The present invention provides a noticeable improvement to CRT brightness uniformity by incorporating small circuitry in addition to existing electronics that are commonly known to operate a CRT screen device. This circuitry basically adds a proper time varying brightness uniformity control signal that affects the beam intensity through the grid 2 (G2) and/or grid(s) G1 of the CRT in such a way that the brightness uniformity increases. This is done by a gradual increase of the beam intensity controlled by an AC signal component in the grid voltage in the peripheral screen areas, which normally appear darker than the centre of the CRT, and/or a gradual decrease of the beam intensity in centralized areas of the CRT screen. In this way the brightness difference between the brightest area to the darkest area is reduced and an increase in brightness uniformity is achieved.

In the following, a preferred embodiment of the present invention will be described with reference to the accompanying drawings.
- Fig. 1: shows an embodiment of a circuit for displaying images on a cathode ray tube; and
- Fig. 2: shows operational wave forms generated by the circuit shown in Fig. 1.

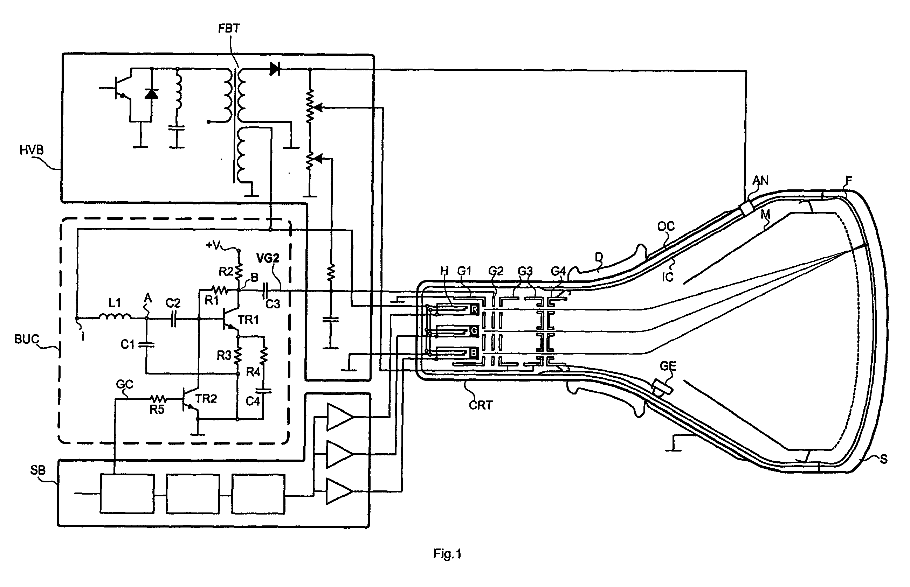

Fig. 1 shows an embodiment of a circuit for displaying images on a cathode ray tube. In this figure, CRT denotes a cathode ray tube having three electron guns for displaying a colour image on a screen S. R, G and B, respectively, denote cathodes heated by a filament H. G1 to G4 denote the grids and electrodes, respectively, provided for controlling and focussing the electron beams generated by the three cathodes. It is to be noted that while one grid G1 has been shown to be associated with the three cathodes R, G and B, this should not be construed as limiting the scope of the invention. Other CRT designs may provide a separate grid G1 for each of the cathodes R, G and B. The present invention is also applicable to this kind of CRTs. G2 denotes a grid which is located between grid G1 and subsequent electrodes G3, G4. Also grid G2 may be provided separately for each of the three beams, or one grid G2 is provided for all the three beams in common, as shown in the figure. These grids and electrodes G2, G3 and G4 conventionally serve to focus the electron beams generated by the cathodes, and to accelerate the beams, as is well known in the art. D denotes a deflection unit for causing the electron beams to perform a scanning motion across the screen S. IC denotes an inner coating of the cathode ray tube which in this particular embodiment is connected with an anode terminal AN, and which is furthermore electrically connected with grid G4 of the cathode ray tube. M denotes a mask electrically connected to the inner coating IC. F denotes inner coatings on the internal surface of the screen S which forms the fluorescent screen of the CRT. All these elements are conventional and as such well known to the skilled person. A variety of different types of CRTs is known in the art, all of which can be used in conjunction with the present invention, even if their structure differs from the exemplary structure shown in Fig. 1. While the CRT shown in Fig. 1 provides single grids G1 to G4 for the three electron beams generated, it would be possible to employ structures wherein at least some of the grids G1 to G4 are provided in triplicate, one for each of the electron beams. Reference sign GE denotes a getter element for removing residual gas in the tube to maintain vacuum. OC denotes an outer conductive coating.

Reference numeral HVB in Fig. 1 denotes a typical high voltage generating block. This circuitry comprises a fly back transformer FBT. This transformer is conventionally used for generating the anode voltage and other auxiliary voltages. In this embodiment, it is also used for providing the filament current for heating the filaments H of the CRT. Voltages provided by the high voltage windings of the fly back transformer FBT are furthermore applied to the grids G2 to G4 and to the anode AN of the cathode ray tube, after rectification, smoothing and voltage division as appropriate, in order to supply the cathode ray tube with the required operating voltages. All these functions can be implemented in a variety of ways, as is well known to those skilled in the art, each of which is intended to be included in the scope of this invention.

Reference sign SB denotes a system block containing the video signal processing, video signal amplifiers for generating the cathode control signals for the three cathodes R, G and B, as well as other modules necessary for operating the CRT, like circuitry for generating the signals needed by the deflection unit D. Again, the system block SB is as such well known in the art. There exists a variety of designs and concepts for amplifying and processing video signals, as well as generating the various other control signals for operating a CRT. These concepts and designs are all suitable in conjunction with the present invention. The invention is not limited to RGB control shown in Fig. 1, wherein each of the three cathodes receives one of the three primary colour signals, but is equally applicable to the so-called colour difference control, wherein the three cathodes receive respective colour difference signals while grid G1 receives the luminance signal.

The reference sign BUC denotes a circuit for brightness uniformity control. In the embodiment shown, this circuit comprises an inductivity L1 having a first terminal I connected to receive a signal from the filament winding of the fly back transformer which winding provides the filament current for the CRT. The other terminal of L1 is connected with a first terminal of a capacitance C1, the second terminal of which is connected to ground. The node A constituted by the first terminal C1 and the second terminal of L1 is connected to one terminal of a capacitance C2. The other terminal of the capacitance C2 is connected with the base of a transistor TR1. The collector of TR1 is connected to a positive supply voltage +V via a resistor R2. The collector and base of TR1 are connected to each other via a resistor R1. R3 denotes an emitter resistor having a first terminal connected to the emitter of TR1. The second terminal of R3 is connected to ground. A series connection of a resistor R4 and a capacitor C4 is connected in parallel with the emitter resistor R3. The node B at the collector of TR1 is connected to grid G2 through a coupling capacitor C3. TR2 denotes a transistor having its collector connected to the base of transistor TR1 and having its emitter connected to ground. The base of transistor TR2 receives an enable signal GC through a resistor R5 from the system block SB.

Now the operation of the embodiment shown in Fig. 1 will be described. This embodiment achieves an improved brightness uniformity by modifying the beam intensity using grid G2 of the CRT. The circuitry adds an alternating correction signal component with predetermined properties (amplitude, shape, frequency and phase) to the voltage at grid G2 of the CRT.

Conventionally, G2 is kept at DC voltage level which is specified by the manufacturer of the CRT screen device. The addition of a brightness uniformity control affects the beam intensity in such a way that the brightness uniformity increases. This is done by a gradual increase of the beam intensity controlled by the brightness uniformity control signal at the areas of the CRT screen edges which normally remain darker. After the brightness uniformity control signal is applied, areas near the edges get an increased beam intensity resulting in a higher brightness level while areas near centre get less beam intensity.

In this way the brightness difference between the brightest area to the darkest area is reduced and therefore, an increase in brightness uniformity is achieved. While the modification to beam intensity is made for correction purposes, its average value still remains within the safe operating range of the CRT, which is specified by its manufacturer.

For the purpose of better understanding, at first the operating details of CRT will be briefly explained. This will also explain the physics of the novel method. A colour CRT operating principle will be explained since colour and monochrome CRTs share the same operating principles in most part.

In this embodiment, there are three separate cathodes in the CRT. Each one is dedicated for one colour. These are the very well known R, G and B (red, green and blue) colours. With the combination of each colour with various intensities, many more colours can be obtained on the CRT screen. The generation of the electron beam starts with the application of a voltage to the filament H to heat the cathodes. This causes near 800°C temperature-rise on the cathodes. Then, electron emission from the special coatings of the cathodes begins to form an electron cloud. With the presence of proper video signals at the cathodes and the grid voltages, the cloud of electrons accelerates toward the screen S of the CRT. The electrons converge for the first time at a point between the cathodes and grid G2. Then the electrons continue to flow, wherein the amount of the flow is controlled mainly by the cathode, G1 and G2 voltages. This accelerated beam of electrons gets focussed while passing through the focus grid G3 and G4 such that all three beams converge at a hole on the shadow mask M. Electrons emitted from the cathodes converge towards the axis as a result of the lens action of G1 and G2 potentials. This produces an extremely small beam diameter (called beam crossover or crossover point) between G1 and G2 and a beam that will diverge again on its way to the main lens G3 and G4 which will display the beam crossover on the screen S. Before the beams reach the shadow mask and hit the phosphorus layer F, the deflection coils D deflect the beams in both horizontal and vertical directions. After each electron beam has passed through the shadow mask M, the beams associated with each colour separate slightly because of the lens effect of the shadow mask holes. Then each cast image of the cathode formed by the electrons hits the corresponding colour phosphoric striped layer. Because the intensity of the colour beams and their location on the CRT screen are synchronously controlled by the video processor circuit, a colour raster image forms on the screen. The RGB cathode voltages are varied in time to form an image with varying colours and intensity.

The circuit denoted BUC in Fig. 1 generates the brightness uniformity correcting signal to be applied to grid G2 of the CRT. This correction signal is derived from the CRT filament voltage that is generated by the fly back transformer FBT. This voltage is applied to input I of the circuit BUG. This waveform is processed by the circuit BUC, and the resulting waveform at node B is added to (superimposed on) the DC level of the voltage VG2 at grid G2 of the CRT. Specifically, in Fig. 1 the input point I is followed by a main waveform shaping stage of the circuit which contains L1, C1 constituting an oscillator circuit, and C2. These components modify the discrete pulsed heater voltage waveform to a continuously repeating parabolic waveform. R1, R2 and R3 determine the gain and bias voltage of the transistor TR1. The resistive value of the resistor R1 is selected such that transistor TR1 is near to its saturation point in the absence of an input signal to the circuit. When an input signal is applied, the positive parts of it do not make a significant change to the output at node B since the transistor is already saturated and delivers its maximum output for the given configuration. However, negative parts of the input signal will pull up the output B from saturation to a near linear range. Thus almost linear amplification of the input signal can take place while the input voltage value remains negative. Because the positive parts of the input voltage continue to keep the transistor TR1 at its saturation point, the G2 voltage of the CRT is also not modified while positive voltages are present at the input. When the input becomes negative, transistor TR1 enters into approximately linear operation mode. The output B becomes positive and follows the shape of the inverted negative input waveform. This waveform is then fed to grid G2 of the CRT via C3. This capacitor C3 isolates the brightness correction circuit from the high DC voltage at the grid G2. The manufacturer of the CRT specifies this DC voltage level for its proper operation point. So, basically this simple electronic arrangement of parts acts as a clamping and inverting amplification circuit with a gain of R2/R3. C4 and R4 provide additional frequency dependent gain that is needed for additional waveform shaping of the output of the circuit. For the operation of the circuit an appropriate voltage supply must be connected to point +V. This circuit provides the periodic variation of the CRT G2 voltage in the increasing direction that is also synchronized with the horizontal scanning. This results in an increase of the beam intensity and brightness in the normally darker areas. As mentioned before, this reduces the difference between the darkest and the brightest areas of the CRT resulting in an increase of the brightness uniformity.

This technique of increasing brightness uniformity can be used on a 16:9 aspect ratio TV receiver that also has the capability of displaying smaller aspect ratio video signal such as 4:3. In that case brightness increase on the vertical edges of the raster image may appear brighter compared to the areas near centre. This happens especially if reduced horizontal scanning is used to compress the horizontal dimension of the raster image. In that case the strength of the correction signal has to be reduced or totally removed from the G2 voltage of the CRT. The resistor R5 is an input element for the signal that is present when the TV unit operates at a 4:3 aspect ratio. This signal could be coming directly from system integrated circuits such as micro controller and video processor. It could also be indirectly detected from the properties of the video signal by an additional circuit. When the 4:3 operation mode signal activates the input of the transistor TR2 via R5, the input of the output transistor TR1 becomes grounded. In this way the output of the circuit can be deactivated.

This invention can be easily implemented for example on the CRT board circuit instead of making major changes to the main board. The brightness uniformity control circuit BUC may advantageously be provided on the CRT board circuit which is normally arranged in close proximity around the socket of the CRT. In the alternative, the BUC circuit may be provided on the main board or in any other suitable location. The degree of correction can be varied as needed in different operational modes of the CRT screen. The invention allows to use flat screen CRT displays with their existing main electronic boards that contain no electronic compensation for brightness uniformity by video processing. The present invention is furthermore applicable in computer monitors, without being limited to these applications. While the embodiment of Fig. 1 provides for an improved brightness uniformity in the horizontal scanning direction, the present invention is not limited to horizontal brightness uniformity control. Rather, the circuit BUC can easily be extended to include vertical brightness uniformity control alternatively or in addition to horizontal brightness uniformity control, for example by using a circuit similar to the one shown in Fig. 1 which receives at its input a field synchronous input signal which is processed and amplified and then superimposed on the DC voltage present at grid G2. Also, while the embodiment shown uses the grid G2 for brightness uniformity control, it is possible to use the grid G1 in addition or as an alternative to grid G2. When grid G1 is used, the control voltage provided by the circuit BUC will then simply be superimposed on the voltage present at grid G1, such that sophisticated circuitry allowing a gain modulation of the video signals is not necessary.

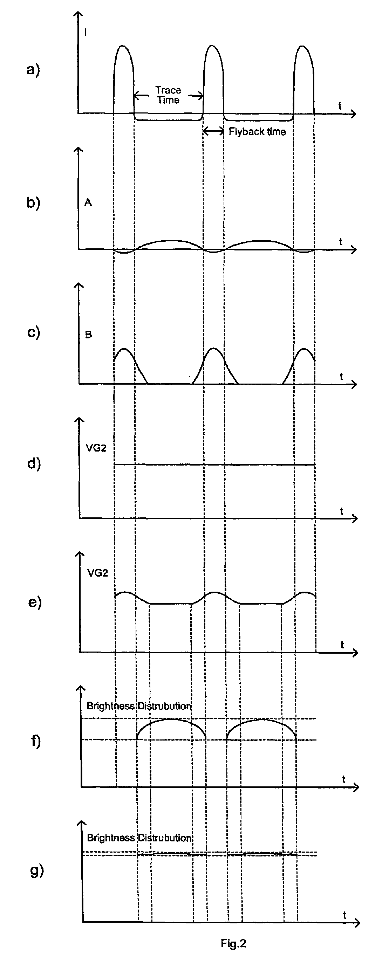

Fig. 2 shows operational waveforms of the circuit of Fig. 1. In particular, Fig. 2a shows the voltage supplied by the fly back transformer filament winding to the input point I of the circuit BUC in Fig. 1. Fig. 2b shows the voltage waveform at point A in Fig. 1. The fly back transformer pulses are transformed into continuous waveforms by means of appropriately designing the values of the inductance L1 and the capacitance C1. Fig. 2c shows the waveform resulting at point B in Fig. 1, that is at the collector of transistor TR1. The signal from point A is fed via capacitor C2 to the base of transistor TR1. This transistor together with the emitter impedance caused by R3, R4, C4, the collector load R2 and the collector base feedback resistor R1 achieves a signal inversion, amplification and clamping. Fig. 2d shows the voltage at grid G2 without brightness uniformity control, for example when transistor TR2 receives a deactivation control signal GC which renders TR2 conductive. Fig. 2e shows the voltage VG2 at the grid G2 when brightness uniformity control is enabled. This figure shows the DC bias voltage at grid G2 superimposed by the voltage at node B in Fig. 2c. Fig. 2f shows the brightness distribution in the horizontal direction in this embodiment, if brightness uniformity control according to the present invention is deactivated. This figure illustrates a drop of the brightness level towards the vertically oriented edges of the screen. Finally, Fig. 2g shows a brightness distribution when brightness uniformity control is enabled. This figure illustrates the effect of the signal shown in Fig. 2c at node B on the brightness distribution along the horizontal scanning direction across the CRT screen. The brightness uniformity control signal at node B results in an increase of the brightness in peripheral areas of the screen in proximity to the vertically oriented edges of the screen.

Devices such as TV receivers, monitors, medical and industrial equipment displays where a CRT is used as the primary source of still or moving image displays are within the scope of this invention. This invention improves brightness uniformity of the CRT screen on such devices.

## Claims

1. An apparatus for displaying images on a cathode ray tube (CRT) having a screen (S), at least one cathode (R, G, B) for providing an electron beam, at least one grid G1, means for accelerating and focussing said electron beam which comprise a grid G2 and an anode (AN), said apparatus comprising
- means (D) for deflecting said electron beam;
- means for driving said electron beam deflection means to enable a horizontal and vertical sweep of the electron beam across said screen;
- means for modulating the beam intensity in accordance with an image to be displayed on the screen of the cathode ray tube by controlling a potential difference between said at least one cathode (R, G, B) and said grid G1;
- means (BUC) for providing a brightness uniformity control signal (B) at a signal level which depends on the horizontal and/or vertical amount of deflection of the electron beam;
said means (BUC) for providing a brightness uniformity control signal comprising a circuit connected to modulate a DC bias potential at said second grid G2 and/or said first grids G1, said circuit comprising
- an oscillator circuit (L1, C1) coupled to oscillate in synchronism with said horizontal sweep synchronous signal and/or an oscillator circuit coupled to oscillate in synchronism with said vertical sweep;
- a transistor coupled to receive a signal from said oscillator circuit;
- a bias network to set an operating point of said transistor in the saturated region, such that said transistor can selectively amplify portions of said signal in time intervals where the electron beam deflection amount is large; and
- a capacitive element (C3) for coupling said brightness uniformity control signal provided by said transistor to said second grid G2 and/or said first grid or grids G1.

2. The apparatus according to claim 1, comprising a flyback transformer, wherein said horizontal sweep synchronous signal is taken from a flyback transformer winding.

3. The apparatus according to claim 2, wherein said horizontal sweep synchronous signal is taken from a flyback transformer winding which is provided for generating a filament current for said cathode ray tube.

4. The apparatus according to claim 1, comprising a system timing controller for generating horizontal and vertical sweep control signals, wherein said horizontal sweep synchronous signal and/or vertical sweep synchronous signal is provided by said system timing controller.

5. The apparatus according to any one of the preceding claims, comprising means for reducing a horizontal sweep amplitude of the electron beam across the screen (D) in accordance with an aspect ratio selection signal; and
- means (TR2) for disabling said brightness uniformity control in accordance with a control signal (GC) indicating the selected aspect ratio.

6. The apparatus according to any one of the preceding claims, wherein said brightness uniformity control signal level is a monotonic function of the horizontal and/or vertical amount of deflection during the active line trace of the electron beam.

7. A television set comprising an apparatus according to any one of the claims 1 to 6.

8. A monitor for displaying video signals provided by a computer, comprising an apparatus according to any one of the claims 1 to 6.

## Patentansprüche

1. Vorrichtung zum Anzeigen von Bildern auf eine Kathodenstrahlröhre (CRT) mit einem Schirm (S), zumindest einer Kathode (R, G, B) zum Bereitstellen eines Elektronenstrahls, zumindest einem Gitter G1, Mitteln zum Beschleunigen und Fokussieren des Elektronenstrahls, die ein Gitter G2 und eine Anode (AN) umfassen, wobei die Vorrichtung umfasst:
- Mittel (D) zum Ablenken des Elektronenstrahls;
- Mittel zum Antreiben des Elektronenstrahl-Ablenkmittels, um ein horizontales und vertikales Ablenken des Elektronenstrahls über den Bildschirm zu ermöglichen;
- Mittel zum Modulieren der Strahlintensität anhand eines auf dem Bildschirm der Kathodenstrahlröhre anzuzeigenden Bildes durch Steuern einer Potentialdifferenz zwischen der zumindest einen Kathode (R, G, B) und dem Gitter (G1);
- Mittel (BUC) zum Bereitstellen eines Helligkeitsgleichmäßigkeits-Steuersignals (B) auf einem Signalpegel, der vom horizontalen und/oder vertikalen Ablenkbetrag des Elektronenstrahls abhängt;
wobei das Mittel (BUC) zum Bereitstellen eines Helligkeitsgleichförmigkeits-Steuersignals eine Schaltung umfasst, die verbunden ist, ein Gleichstromvorspannungspotential am zweiten Gitter G2 und/oder den ersten Gittern G1 zu modulieren, wobei die Schaltung umfasst:
- eine Oszillatorschaltung (L1, C1), die eingekoppelt ist, um synchron zum Horizontalablenk-Synchronsignal zu oszillieren, und/oder eine Oszillatorschaltung, die eingekoppelt ist, synchron zur vertikalen Ablenkung zu oszillieren;
- einen Transistor, der gekoppelt ist, um ein Signal aus der Oszillatorschaltung zu empfangen;
- ein Vorspannungsnetzwerk, um einen Betriebspunkt des Transistors im gesättigten Bereich einzustellen, so dass der Transistor selektiv Teile des Signals in Zeitintervallen verstärken kann, wo der Elektronenstrahl-Ablenkungsbetrag groß ist; und
- ein kapazitives Element (C3) zum Koppeln des durch den Transistor bereitgestellten Helligkeitsgleichförmigkeits-Steuersignals mit dem zweiten Gitter G2 und/oder dem ersten Gitter oder Gittern G1.

2. Vorrichtung gemäß Anspruch 1, umfassend einen Horizontal-Ablenktransformator, wobei das Horizontalablenk-Synchronsignal aus einer Horizontal-Ablenktransformatorwicklung abgenommen wird.

3. Vorrichtung gemäß Anspruch 2, wobei das Horizontal-Ablenksynchronsignal aus einer Horizontal-Ablenktransformatorwicklung abgenommen wird, die bereitgestellt ist, um einen Filamentstrom für die Kathodenstrahlröhre zu erzeugen.

4. Vorrichtung gemäß Anspruch 1, umfassend eine System-Timing-Steuerungsvorrichtung zum Erzeugen horizontaler und vertikaler Ablenksteuersignale, wobei das Horizontal-Ablenksynchronsignal und/oder Vertikal-Ablenksynchronsignal durch die System-Timing-Steuervorrichtung bereitgestellt ist.

5. Vorrichtung gemäß einem der vorstehenden Ansprüche, umfassend Mittel zum Reduzieren einer horizontalen Ablenkamplitude des Elektronenstrahls über dem Bildschirm (D) anhand eines Aspektverhältnisauswahlsignals; und
- Mittel (TR2) zum Abschalten der Helligkeitsgleichförmigkeits-Steuerung anhand eines Steuersignals (GC), welches das ausgewählte Aspektverhältnis anzeigt.

6. Vorrichtung gemäß einem der vorstehenden Ansprüche, wobei der Helligkeitsgleichförmigkeits-Steuersignalpegel eine monotone Funktion des horizontalen und/oder vertikalen Ablenkbetrags während der aktiven Zeilenverfolgung des Elektronenstrahls ist.

7. Fernseher, umfassend eine Vorrichtung gemäß einem der Ansprüche 1 bis 6.

8. Monitor zum Anzeigen von Videosignalen, die durch einen Computer bereitgestellt werden, umfassend eine Vorrichtung gemäß einem der Ansprüche 1 bis 6.

## Revendications

1. Appareil destiné à l'affichage d'images sur un tube cathodique (CRT) disposant d'un écran (S), d'au moins une cathode (R, G, B) pour fournir un faisceau d'électrons, d'au moins une grille G1, d'un moyen pour accélérer et focaliser ledit faisceau d'électrons qui comprend une grille G2 et une anode (AN), ledit appareil comprenant
- un moyen (D) pour dévier ledit faisceau d'électrons;
- un moyen pour entraîner ledit moyen de déviation du faisceau d'électrons pour permettre un balayage horizontal et vertical du faisceau d'électrons en travers dudit écran ;
- un moyen pour moduler l'intensité du faisceau conformément à une image à afficher sur l'écran du tube cathodique en commandant une différence de potentiel entre ladite au moins une cathode (R, G, B) et ladite grille G1 ;
- un moyen (BUC) pour fournir un signal de commande (B) de l'uniformité de luminosité à un niveau de signal qui dépend de la quantité de déviation horizontale et/ou verticale du faisceau d'électrons ;
ledit moyen (BUC) pour fournir un signal de commande de l'uniformité de luminosité comprenant un circuit connecté pour moduler un potentiel de polarisation en courant continu au niveau de ladite deuxième grille G2 et/ou desdites premières grilles G1, ledit circuit comprenant
- un circuit oscillateur (L1, C1) couplé pour osciller de manière synchronisée avec ledit signal synchrone de balayage horizontal et/ou un circuit oscillateur couplé pour osciller en synchronisme avec ledit balayage vertical;
- un transistor couplé pour recevoir un signal provenant dudit circuit oscillateur ;
- un réseau de polarisation pour fixer un point de fonctionnement dudit transistor dans la région saturée, de sorte que ledit transistor puisse amplifier sélectivement des parties dudit signal par intervalles de temps où la quantité de déviation du faisceau d'électrons est importante ; et
- un élément capacitif (C3) pour coupler ledit signal de commande de l'uniformité de luminosité fourni par ledit transistor au niveau de ladite deuxième grille G2 et/ou de ladite première grille ou premières grilles G1.

2. Appareil selon la revendication 1, comprenant un transformateur de balayage horizontal, dans lequel ledit signal synchrone de balayage horizontal est pris d'un enroulement de transformateur de balayage horizontal.

3. Appareil selon la revendication 2, dans lequel ledit signal synchrone de balayage horizontal est pris d'un enroulement de transformateur de balayage horizontal qui est fourni pour générer un courant de chauffage pour ledit tube cathodique.

4. Appareil selon la revendication 1, comprenant une unité de commande de synchronisation du système pour générer des signaux de commande de balayage horizontal et vertical, dans lequel ledit signal synchrone de balayage horizontal et/ou ledit signal synchrone de balayage vertical est fourni par ladite unité de commande de synchronisation du système.

5. Appareil selon l'une quelconque des revendications précédentes, comprenant un moyen pour réduire une amplitude de balayage horizontal du faisceau d'électrons sur l'écran (D) conformément à un signal de sélection de rapport largeur/longueur ; et
- un moyen (TR2) pour désactiver ladite commande de l'uniformité de luminosité conformément à un signal de commande (GC) indiquant le rapport largeur/longueur sélectionné.

6. Appareil selon l'une quelconque des revendications précédentes, dans lequel ledit niveau de signal de commande de l'uniformité de luminosité est une fonction monotone de la quantité de déviation horizontale et/ou verticale durant le traçage de ligne active du faisceau d'électrons.

7. Téléviseur comprenant un appareil selon l'une quelconque des revendications 1 à 6.

8. Dispositif de surveillance pour afficher des signaux vidéo fournis par un ordinateur, comprenant un appareil selon l'une quelconque des revendications 1 à 6.
